# FASCICULE DE BREVET EUROPEEN

(11) **EP 2 892 645 B1**
(45) Date de publication et mention de la délivrance du brevet: **20.07.2016**
(21) Numéro de dépôt: 13756482.9
(22) Date de dépôt: 03.09.2013
(51) Int. Cl.: B01J 20/22, B01J 20/32, B01D 53/68, B01D 53/02, C01C 3/11, C01C 3/12, G21C 19/42, G21F 9/02, G21F 9/04

(54) **UTILISATION D'UN MATERIAU TYPE CLATHRATE DE HOFMANN POUR L'EXTRACTION DE L'IODE MOLECULAIRE**
VERWENDUNG EINES MATERIALS VOM TYP HOFMANN-KLATHRAT ZUR EXTRAKTION VON MOLEKULAREM IOD
USE OF A HOFMANN CLATHRATE TYPE MATERIAL FOR THE EXTRACTION OF MOLECULAR IODINE

(30) Priorité: 05.09.2012 FR 1258304
(43) Date de publication de la demande: 15.07.2015
(73) Titulaire: Commissariat à l'Énergie Atomique et aux Énergies Alternatives, 75015 Paris (FR); Centre National de la Recherche Scientifique (CNRS), 75016 Paris (FR); Université de Montpellier 2, 34000 Montpellier (FR)
(72) Inventeur: GRANDJEAN, Agnès, F-30330 Saint Marcel De Careiret (FR); BARRE, Yves, F-84100 Uchaux (FR); TOKAREV, Alexey, F-30200 Bagnols sur Cèze (FR); CAUSSE, Jérémy, F-30131 Pujaut (FR); GUARI, Yannick, F-34730 Prades Le Lez (FR); LARIONOVA, Joulia, F-34730 Prades Le Lez (FR); MASSASSO, Giovanni, F-34090 Montpellier (FR); LONG, Jérôme, F-34090 Montpellier (FR)
(74) Mandataire: Brevalex
(86) Numéro de dépôt international: PCT/EP2013/068196
(87) Numéro de publication internationale: WO 2014/037353

(56) Documents cités:
- GLORIA AGUSTÍ ET AL: "Oxidative Addition of Halogens on Open Metal Sites in a Microporous Spin-Crossover Coordination Polymer", ANGEWANDTE CHEMIE INTERNATIONAL EDITION, vol. 48, no. 47, 23 octobre 2009 (2009-10-23), pages 8944-8947, XP055056970, ISSN: 1433-7851, DOI: 10.1002/anie.200904379
- SAIOA COBO ET AL: "Multilayer Sequential Assembly of Thin Films That Display Room-Temperature Spin Crossover with Hysteresis", ANGEWANDTE CHEMIE INTERNATIONAL EDITION, vol. 45, no. 35, 26 juillet 2006 (2006-07-26), pages 5786-5789, XP055056971, ISSN: 1433-7851, DOI: 10.1002/anie.200601885
- CARLOS BARTUAL-MURGUI ET AL: "High quality nano-patterned thin films of the coordination compound {Fe(pyrazine)[Pt(CN)4]} deposited layer-by-layer", NEW JOURNAL OF CHEMISTRY, vol. 35, no. 10, 26 mai 2011 (2011-05-26), page 2089, XP055056973, ISSN: 1144-0546, DOI: 10.1039/c1nj20212j
- ANNA SOPKOVÁ ET AL: "The preparation of tetracyanonickelates showing electrical conductivity", JOURNAL OF INCLUSION PHENOMENA AND MOLECULAR RECOGNITION IN CHEMISTRY, vol. 7, no. 4, 1 août 1989 (1989-08-01), pages 401-412, XP055056865, ISSN: 0923-0750, DOI: 10.1007/BF01079775
- A. T. OZA: "Oxidation of tetracyanonickellate (II) in the presence of organic cation", CRYSTAL RESEARCH AND TECHNOLOGY, vol. 24, no. 7, juillet 1989 (1989-07), pages 711-716, XP055056867, ISSN: 0232-1300, DOI: 10.1002/crat.2170240715

## Description

### DOMAINE TECHNIQUE

La présente invention se rapporte à l'utilisation de matériaux solides aptes à piéger de l'iode moléculaire.

Cette invention trouve notamment des applications dans le domaine du retraitement des combustibles nucléaires usés où elle est susceptible d'être utilisée pour extraire puis conditionner l'iode radioactif contenu dans différents types d'effluents (liquides, gazeux, ...) qui sont produits au cours de ce retraitement et, en particulier, l'iode 129.

### ÉTAT DE LA TECHNIQUE ANTÉRIEURE

Le retraitement des combustibles nucléaires usés implique une étape de dissolution de ces combustibles produisant des effluents gazeux, qui ne peuvent pas être directement rejetés dans l'atmosphère, car ils contiennent des produits de fission volatils et, plus particulièrement de l'iode moléculaire I₂.

L'iode est un produit de fission qui est présent dans les combustibles nucléaires usés et dont l'isotope 129 possède une demi-vie de 15,7 millions d'années, qui présente une radiotoxicité pour l'homme, qui est étroitement liée à son affinité pour la glande thyroïdienne dans laquelle il se concentre.

C'est la raison pour laquelle il est indispensable de procéder au piégeage de cet iode volatil par voie liquide ou par voie solide.

Concernant la voie liquide, celle-ci consiste plus précisément à faire subir un lavage sodique aux gaz de dissolution comprenant l'iode, moyennant quoi l'iode moléculaire est transformé en iodure de sodium, les effluents de lavage contenant l'iodure de sodium étant ensuite rejeté en mer.

Concernant la voie solide, celle-ci consiste à mettre en contact les gaz de dissolution comprenant l'iode avec un composé solide apte à adsorber l'iode (lequel peut être qualifié d'adsorbant), moyennant quoi les gaz se trouvent ainsi débarrassés de l'iode nocif.

Actuellement, des adsorbants couramment utilisés sont des supports solides minéraux à base de silice ou d'alumine imprégnée de nitrate d'argent. Au contact de ces supports, l'iode est piégé sous forme de particules d'iodure d'argent AgI ou d'iodate d'argent AgIO₃. Ces particules ne se trouvent pas liées en tant que telles aux supports. Pour permettre un stockage de ces derniers en surface, il est nécessaire, en vue d'un déclassement, de procéder à une décontamination partielle de ceux-ci en voie aqueuse, consistant en des lavages successifs du support par des solutions sodiques réductrices, des solutions acides et par de l'eau. Les effluents liquides résultants, sont, au même titre que pour la voie liquide susmentionnée, rejetés en mer, ce qui n'est pas sans conséquence néfaste pour l'environnement.

D'autres types d'adsorbants ont été proposés dans la littérature, sans qu'ils n'aient été mis en oeuvre, à l'heure actuelle, à l'échelle industrielle.

C'est le cas des adsorbants décrits dans Choi et al. (Journal of Radioanalytical and Nuclear Chemistry, vol. 256, N°1 (2003), 19-26)), qui consistent en des zéolites à échanges d'ions à base d'argent, l'argent remplissant le rôle de piégeur de l'iode. Toutefois, la cinétique d'adsorption de l'iode sur ces zéolites est limitante, à cause d'une diffusion très lente de l'iode au sein de la structure poreuse de la zéolite.

Riley et al. (RSC Adv., 2011, 1, 1704-1715) ont proposé comme adsorbants des aérogels à base d'éléments chalcogènes, qualifiés ainsi de chalcogels, et en particulier, des chalcogels du type Pt-Ge-S préparés par réaction en milieu aqueux d'un précurseur à base de germanium (R₄Ge₄S₁₀ avec R correspondant à un groupe (CH₃)₄N) et d'un précurseur à base de platine (K₂PtCl₄). Pour appliquer ces matériaux à l'échelle industrielle, il faudrait pouvoir s'assurer de la tenue en lixiviation à long terme de ceux-ci, donnée qui reste inconnue à l'heure actuelle.

Ampelogova et al. (Atomic Energy, vol. 92, n°4, 2002) ont élaboré des matériaux du type busofite à base de fibres de carbone. Ces matériaux présentent, toutefois, l'inconvénient de ne pas pouvoir être immobilisés dans une matrice oxyde du type ciment ou verre et également celui de ne pas pouvoir être éliminés par calcination du fait de la volatilité de l'iode. La seule possibilité reste ainsi le stockage en surface, qui impose une désextraction de l'iode ainsi piégé par un procédé en voie aqueuse, tel que défini ci-dessus avec tous les inconvénients liés au rejet des effluents aqueux résultants dans la mer.

Enfin, Huang et al. (Chem.Commun., 2012, 48, 3227-3229) proposent des matériaux organiques formant une cage à base de ligand(s) comprenant des ponts disulfures aptes à absorber l'iode contenu dans des effluents gazeux. Toutefois, ces absorbants ne permettent pas une captation irréversible de l'iode, ce qui les rend peu compatibles avec une utilisation à l'échelle industrielle dans le domaine nucléaire.

Agusti et al. (Angew. Chem. Int. Ed., 2009, 48, 8944-8947) rapportent la chimisorption des molécules dihalogénés, comme l'iode moléculaire par un matériau du type polymère de coordination poreux (en anglais : porous coordination polymer, PCP) répondant à la formule Fe(pz)[Pt(CN)₄] avec pz = pyrazine.

Enfin, Sopková et al. (J. Incl. Phen. Mol. Recogn. Chem., 1989, 7, 401-412) rapportent l'intercalation d'iode moléculaire dans un complexe répondant à la formule Ni(en)₃Ni(CN)_{4·} H₂O avec en = éthylènediamine.

Au regard de ce qui existe et des inconvénients susmentionnés, les auteurs de la présente invention ont pu découvrir que des matériaux solides poreux spécifiques sont aptes à adsorber l'iode moléculaire, en particulier celui issu du retraitement des combustibles usés, et, qui plus est, qui sont aptes à être confinés, soit par fermeture de la porosité de ces matériaux soit par encapsulation de ces derniers dans une matrice réfractaire, telle qu'une matrice en ciment ou une matrice en verre basse température.

### EXPOSÉ DE L'INVENTION

Ainsi, l'invention a trait à l'utilisation pour l'extraction d'iode moléculaire d'un matériau comprenant un premier matériau répondant à la formule (I) suivante :

M(L)ₓ[M' (CN)₄] (I)

dans laquelle :
- M et M' sont choisis indépendamment, l'un de l'autre, parmi Fe et Ni;
- x est un entier positif ; et
- L est un ligand organique choisi parmi les composés hétérocycliques, éventuellement aromatiques, comprenant au moins un atome d' azote, et
dans laquelle le matériau comprend, en outre, un deuxième matériau, qui est un support dudit premier matériau.

Comme mentionné ci-dessus, L est un ligand organique choisi parmi les composés hétérocycliques, éventuellement aromatiques, comprenant au moins un atome d'azote, ce qui couvrent à la fois :
- les composés hétérocycliques aromatiques comprenant au moins un atome d'azote ;
- les composés hétérocycliques non aromatiques comprenant au moins un atome d'azote.

Plus spécifiquement, les composés hétérocycliques aromatiques susmentionnés peuvent comprendre, avantageusement, au moins deux atomes d'azote dans un cycle, de tels composés pouvant être choisis parmi les composés pyrazines, les composés pyridazines, les composés pyrimidines, les composés triazines et les composés tétrazines.

Par composé pyrazine, on entend un composé 1,4-diazine, c'est-à-dire un composé comprenant un groupe phényle dont les atomes de carbone en positions 1 et 4 sont remplacés par un atome d'azote, un ou plusieurs atomes d'hydrogène portés par les atomes de carbone du cycle pouvant être substitué(s) par un autre groupe.

Le composé pyrazine non substitué répond à la formule suivante :

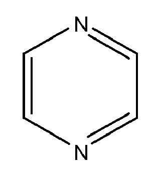

Par composé pyridazine, on entend un composé 1,2-diazine, c'est-à-dire un composé comprenant un groupe phényle dont les atomes de carbone en positions 1 et 2 sont remplacés par un atome d'azote, un ou plusieurs atomes d'hydrogène portés par les atomes de carbone du cycle pouvant être substitué(s) par un autre groupe.

Le composé pyridazine non substitué répond à la formule suivante :

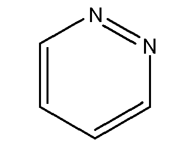

Par composé pyrimidine, on entend un composé 1,3-diazine, c'est-à-dire un composé comprenant un groupe phényle dont les atomes de carbone en positions 1 et 3 sont remplacés par un atome d'azote, un ou plusieurs atomes d'hydrogène portés par les atomes de carbone du cycle pouvant être substitué (s) par un autre groupe.

Le composé pyrimidine non substitué répond à la formule suivante :

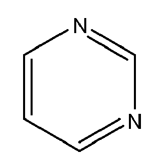

Par composé triazine, on entend un composé comprenant un groupe phényle dont trois des atomes de carbone du cycle sont remplacés par des atomes d'azote, un ou plusieurs atomes d'hydrogène portés par les atomes de carbone du cycle pouvant être substitué(s) par un autre groupe. Ce composé peut exister sous différentes formes isomères selon la position relative des atomes d'azote les uns par rapport aux autres, les formes isomères pouvant correspondre au 1,2,3-triazine, au 1,2,4-triazine ou au 1,3,5-triazine.

Les formes isomères du composé triazine non substitué répondent aux formules suivantes :

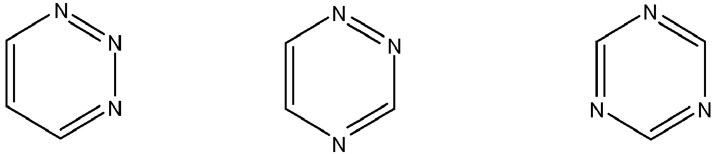

Par composé tétrazine, on entend un composé comprenant un groupe phényle dont quatre des atomes de carbone du cycle sont remplacés par des atomes d'azote, un ou plusieurs atomes d'hydrogène portés par les atomes de carbone du cycle pouvant être substitué(s) par un autre groupe. Ce composé peut exister sous différentes formes isomères selon la position relative des atomes d'azote les uns par rapport aux autres, les formes isomères pouvant correspondre au 1,2,3,4-tétrazine, la 1,2,4,5-tétrazine et la 1,2,3,5-tétrazine.

Les formes isomères du composé triazine non substitué répondent aux formules suivantes :

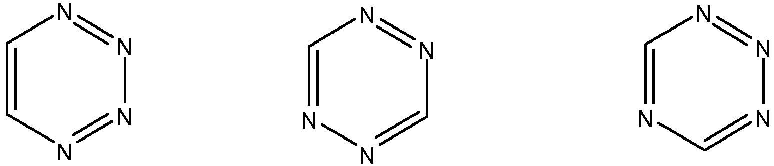

Plus spécifiquement, les composés hétérocycliques non aromatiques comprenant au moins un atome d'azote peuvent être un composé pipéridine, c'est-à-dire un composé hexahydroazine, un ou plusieurs atomes d'hydrogène portés par les atomes de carbone du cycle pouvant être substitué(s) par un autre groupe.

Le composé pipéridine non substitué répond à la formule suivante :

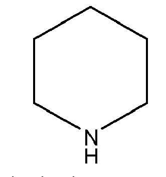

Des matériaux spécifiques répondant à cette définition sont des matériaux pour lesquels, dans le premier matériau de formule (I), M et M' sont choisis indépendamment, l'un de l'autre, parmi Fe et Ni et L est un composé pyrazine, des exemples spécifiques étant Fe(L)[Ni(CN)₄] et Ni(L)[Ni(CN)₄] avec L étant un ligand pyrazine.

Les premiers matériaux de formule (I) sont également qualifiés par l'expression de clathrates de Hoffmann.

Les matériaux utilisés au sein de l'invention comprennent, en outre, un deuxième matériau, qui est un support dudit premier matériau. Ce deuxième matériau peut être lié audit premier matériau.

La liaison au support peut consister en au moins une liaison de coordination entre au moins un groupe du support et l'élément M et/ou l'élément M' du premier matériau de formule (I).

Ledit au moins un groupe du support peut être un groupe comprenant au moins un atome porteur d'un doublet libre ou d'une charge négative.

Plus spécifiquement, ledit au moins un groupe du support est un groupe porteur d'un atome d'azote pourvu d'un doublet libre.

Ce support peut être en un matériau solide inorganique poreux, tel qu'un matériau oxyde. Plus spécifiquement, le support peut être en oxyde de silicium, oxyde de titane, oxyde de zirconium ou oxyde d'aluminium, ledit matériau de formule (I) étant lié audit support, notamment au sein de la porosité dudit support.

Plus spécifiquement, il peut s'agir d'un support solide mésoporeux (par exemple, des supports poreux dont la taille de pores varie de 2 à 50 nm) sous forme particulaire, la taille des particules pouvant être supérieure à 10 µm, moyennant quoi les premiers matériaux de formule (I) liés à de tels supports peuvent être utilisés dans le cadre d'un procédé d'extraction de l'iode en colonne.

Avantageusement, le support doit être en un matériau compatible avec les matériaux de confinement classiquement utilisés dans le cadre du retraitement de combustible nucléaire, tels que les ciments, les verres.

Des exemples précis répondant à cette spécificité peuvent être :
- un matériau comprenant un premier matériau de formule Fe(L)[Ni(CN)₄], L étant un ligand pyrazine, ce dernier se présentant sous forme de particules et comprenant un deuxième matériau, qui est un support constitué par des billes en silice poreuse, auxquelles sont liées lesdites particules ;
- un matériau comprenant un premier matériau de formule Fe(L)[Ni(CN)₄], L étant un ligand pyrazine, ce dernier se présentant sous forme de particules et comprenant un deuxième matériau, qui est un support constitué par des billes en verre, auxquelles sont liées lesdites particules ; ou
- un matériau comprenant un premier matériau de formule Ni(L)[Ni(CN)₄], L étant un ligand pyrazine, ce dernier se présentant sous forme de particules et comprenant un deuxième matériau, qui est un support constitué par des billes en verre, auxquelles sont liées lesdites particules.

Les matériaux décrits dans le cadre de cette invention sont synthétisés par des voies différentes, selon qu'ils comprennent ou non un deuxième matériau, qui est un support dudit premier matériau.

Puisque les matériaux utilisés au sein de l'invention comprennent, en outre, un deuxième matériau, qui est un support, il y a, en premier lieu, une étape de mise en contact avec un support comprenant des groupes aptes à réagir ultérieurement avec l'élément M et/ou l'élément M' pour former une liaison de coordination.

Pour ce faire, il peut être nécessaire de procéder à une étape préalable de fonctionnalisation d'un support, de sorte à introduire sur ce dernier lesdits groupes.

A titre d'exemple, lorsque le support est constitué de billes de silice, l'étape préalable de fonctionnalisation peut consister à mettre en contact lesdites billes avec un agent de fonctionnalisation du type silane, par exemple, un agent de fonctionnalisation du type alcoxysilane porteur d'au moins un groupe (par exemple, un groupe amino ou un groupe porteur d'un atome d'oxygène) apte à former une liaison de coordination avec l'élément M et/ou M', cette mise en contact étant pratiquée dans des conditions opératoires pour permettre la liaison, de préférence, par covalence, dudit agent sur le support.

Un autre type d'agent de fonctionnalisation peut être un agent du type phosphonate.

Dans le cas d'un agent du type alcoxysilane, le greffage avec le support se fait par réaction entre les groupes alcoxy et des groupes présents à la surface du support.

A titre d'exemple, l'agent de fonctionnalisation du type alcoxysilane peut être un composé alcoxysilane comprenant au moins un groupe amino, tel que le N-2-aminoéthyl-3-aminopropyltriméthoxysilane.

Le support est, en deuxième lieu, soumis à un cycle d'étapes successives comprenant :
- une étape d'imprégnation avec un sel de M ;
- une étape d'imprégnation avec un ligand L ; et
- une étape d'imprégnation avec un sel de M' du type cyanure de M',

ces étapes étant réalisées dans des conditions appropriées pour former ledit matériau de l'invention et ce cycle pouvant être répétée une ou plusieurs fois selon les cas de figure.

A l'issue de ce ou ces cycles, le support se trouve ainsi pourvu de particules (par exemple, des nanoparticules) du premier matériau de formule (I) tel que défini ci-dessus.

Les matériaux sont utilisés dans le cadre de l'extraction de l'iode moléculaire présent, par exemple, en milieu liquide et/ou gazeux, ce qui signifie, en d'autres termes, que les matériaux susmentionnés sont destinés à être mis en oeuvre dans le cadre d'un procédé d'extraction de l'iode moléculaire d'un milieu le comprenant, par exemple un milieu liquide et/ou gazeux, ce procédé comprenant une étape de mise en contact dudit milieu avec lesdits matériaux, moyennant quoi l'iode moléculaire se retrouve piégé par lesdits matériaux suivie, éventuellement, d'une étape d'isolement dudit matériau ayant piégé l'iode moléculaire.

Les matériaux décrits dans le cadre de l'utilisation sont particulièrement adaptés pour le piégeage de l'iode moléculaire issu du retraitement des combustibles usés, car, une fois le piégeage effectué, ils sont à même, du fait de leurs caractéristiques intrinsèques, à être incorporés dans un matériau de confinement du type de ceux utilisés classiquement dans le retraitement des combustibles nucléaires, tel que le verre, le ciment ou tout autre type de matériau de confinement, cette incorporation pouvant se faire dans le cadre d'un procédé de confinement comprenant l'incorporation d'un complexe formé dudit matériau tel que défini ci-dessus et d'iode moléculaire dans un matériau de confinement, par exemple, du type verre, ciment pour former un matériau de stockage.

Une fois incorporés dans un matériau de confinement, les matériaux utilisés au sein de l'invention ayant piégé de l'iode moléculaire peuvent être stockés par entreposage sans nuisance pour l'environnement.

D'autres caractéristiques et avantages de l'invention apparaîtront du complément de description qui suit qui se rapporte à un exemple de préparation d'un module conforme à l'invention.

Bien entendu, ce complément de description n'est donné qu'à titre d'illustration de l'invention et n'en constitue en aucun cas une limitation.

### EXPOSÉ DÉTAILLÉ DE MODES DE RÉALISATION PARTICULIERS

### EXEMPLE 1

Le présent exemple illustre, dans un premier temps, la préparation d'un matériau tel qu'utilisé au sein de l'invention comprenant :
- un premier matériau du type clathrate de Hoffmann de formule (Fe(pz)[Ni(CN)₄] (avec pz étant un ligand pyrazine), ce dernier se présentant sous forme de nanoparticules ; et
- un deuxième matériau qui est un support solide, lequel support est une silice poreuse présentant une surface spécifique de 717 m²/g, auquel sont liées lesdites particules.

La préparation de ce matériau est réalisée de la manière suivante.

Dans un premier temps, il est procédé à la préparation de la silice.

Pour ce faire, 8,75 g de HCl (37% v/v) et 4 g de Pluronic P123 sont ajoutés dans 120 mL d'eau distillée et la solution est agitée jusqu'à complète dissolution. Ensuite, la solution est chauffée à 35°C et 6,8 g de triméthylbenzène sont ajoutés. Après 3 heures, 8,5 g de tétraéthoxysilane sont ajoutés. Après 1 heure, la solution est insérée dans un autoclave de 600 mL et traitée à 100°C pendant 24 heures. A l'issue de ces 24 heures, le produit résultant est filtré puis est traité à 550°C pendant 6 heures. Le produit résultant est une silice mésoporeuse.

Dans un deuxième temps, il est procédé à la préparation d'une silice fonctionnalisée à partir de la silice, dont la préparation est explicitée ci-dessus.

Pour ce faire, 2 g de silice mésoporeuse sont agités pendant 3 jours dans une solution comprenant du toluène portée à reflux, préalablement distillée sous atmosphère inerte, en présence d'un composé diamine de formule C₈H₂₂N₂SiO₃: la N-2-aminométhyl-3-aminopropyltriméthyloxysilane, moyennant quoi l'on obtient une silice fonctionnalisée.

Dans un troisième temps, il est procédé à la synthèse du clathrate de formule (Fe(pz)[Ni(CN)₄] sur la silice fonctionnalisée.

Pour ce faire, dans un tube de Schlenk, 1 g de silice fonctionnalisée est placé sous agitation avec une solution de 0,6 g de Fe(BF₄)*6H₂O dans du méthanol sous atmosphère inerte pendant 2 jours. Ensuite, la solution est prélevée et une solution de 0,2 g de pyrazine dans du méthanol est ajoutée au solide sous agitation pendant 2 jours. A l'issue de ces 2 jours, la solution est, à nouveau, prélevée et une solution de 1 g de TBA₂Ni(CN)₄ (TBA signifiant tétrabutylammonium) dans du méthanol est ajoutée au solide sous agitation pendant 2 jours. La succession d'étapes mentionnée ci-dessus est répétée une deuxième fois pour assurer la croissance des nanoparticules dans les pores de la silice. Le matériau résultant présente une couleur orange similaire à celle de la poudre de Fe(pz)Ni(CN)₄ massive.

Le matériau obtenu est utilisé pour procéder à l'extraction de l'iode moléculaire.

Pour ce faire, on prépare une solution de 100 mL de cyclohexane contenant de l'iode moléculaire à hauteur de 1,2 mmol/L. A cette solution, on ajoute 0,5 g du matériau susmentionné et on agite l'ensemble pendant 24 heures.

A l'issue de ces 24 heures, l'analyse de la solution indique une concentration en iode moléculaire de 10⁻³ mmol/L.

Le matériau ainsi préparé est donc apte à capter l'iode moléculaire avec une capacité de piégeage de 0,2 mmol/g.

En parallèle, des essais ont été effectués avec de l'iode moléculaire gazeux sous trois conditions différentes (à 40°C, à 80°C et à 80°C en présence d'eau). Les essais sont effectués en plaçant le matériau et l'iode dans des piluliers séparés, lesquels sont insérés dans un conteneur fermé hermétiquement et conservé à température constante pendant 3 jours. Le rapport massif iode/matériau est de 0,5. La pression de vapeur d'iode est de 1 mm Hg à 40°C et de 15 mm Hg à 80°C. L'iode sublimé est capturé par le matériau et aucune trace n'est observée hors des piluliers. Dans tous les cas testés, on observe une coloration du matériau après ces tests d'extraction, laquelle a été également observée après analyse.

### EXEMPLE 2

Le présent exemple illustre la préparation d'un matériau tel qu'utilisé au sein de l'invention comprenant :
- un premier matériau du type clathrate de Hoffmann de formule (Fe(pz)[Ni(CN)₄] (avec pz étant un ligand pyrazine) se présentant sous forme de nanoparticules ; et
- un deuxième matériau, qui est un support solide, qui consiste en des billes de verre d'un diamètre allant de 310 à 500 µm, auxquelles sont liées lesdites nanoparticules.

Dans un premier temps, il est procédé à une activation de ces billes (avant liaison) en les plaçant sous vide à 150°C pendant une nuit.

Dans un deuxième temps, il est procédé à la fonctionnalisation de ces billes.

Pour ce faire, 2 g de billes de verre sont agités pendant 3 jours dans une solution comprenant du toluène portée à reflux, préalablement distillée sous atmosphère inerte, en présence d'un composé diamine de formule C₈H₂₂N₂SiO₃ : la N-2-aminométhyl-3-aminopropyltriméthyloxysilane, moyennant quoi l'on obtient des billes fonctionnalisées.

Dans un troisième temps, il est procédé à la synthèse du clathrate de formule (Fe(pz)[Ni(CN)₄] sur ces billes fonctionnalisées.

Pour ce faire, dans un tube de Schlenk, 2 g de billes de verre sont placés sous agitation avec une solution de 1,2 g de Fe(BF₄)*6H₂O dans du méthanol sous argon pendant 2 jours. Ensuite, la solution est prélevée et une solution de 0,4 g de pyrazine dans du méthanol est ajoutée au solide sous agitation pendant 2 jours. A l'issue de ces 2 jours, la solution est, à nouveau, prélevée et une solution de 2 g de TBA₂Ni(CN)₄ dans du méthanol est ajoutée au solide sous agitation pendant 2 jours. La succession d'étapes mentionnée ci-dessus est répétée une deuxième fois pour assurer la croissance des nanoparticules à la surface des billes. Le matériau résultant présente une couleur orange similaire à celle de la poudre de Fe(pz)Ni(CN)₄ massive.

Le matériau obtenu est utilisé pour procéder à l'extraction de l'iode moléculaire.

Pour ce faire, on prépare une solution de 50 mL de cyclohexane contenant de l'iode moléculaire à hauteur de 3,41 mmol/L. A cette solution, on ajoute 0,5 g du matériau susmentionné et on agite l'ensemble pendant 24 heures.

A l'issue de ces 24 heures, l'analyse de la solution indique une concentration en iode moléculaire de 10⁻³ mmol/L.

Le matériau ainsi préparé est donc apte à capter l'iode moléculaire avec une capacité de piégeage de 0,68 mmol/g.

Des essais d'extraction d'iode en milieu gazeux ont été réalisés dans les mêmes conditions que dans l'exemple 1. On observe également une coloration du matériau après les essais d'extraction, qui atteste de la présence d'iode.

Le matériau obtenu est lavé pour éliminer l'iode cristallisé sur la surface et l'iode physisorbé. D'après l'analyse MED/EDX, 1 g de matériau capture 7,8*10⁻⁴ moles de I₂ à 40°C et 8,6*10⁻⁴ moles de I₂ à 80°C et 5,2*10⁻⁴ moles de I₂ à 80°C en présence de vapeur d'eau.

### EXEMPLE 3

Le présent exemple illustre la préparation d'un matériau tel qu'utilisé au sein de l'invention comprenant :
- un premier matériau du type clathrate de Hoffmann de formule (Ni(pz)[Ni(CN)₄] (avec pz étant un ligand pyrazine), se présentant sous forme de nanoparticules ; et
- un deuxième matériau, qui est un support solide, qui consiste en des billes de verre d'un diamètre allant de 310 à 500 µm, auxquelles sont liées lesdites nanoparticules.

Dans un premier temps, il est procédé à une activation de ces billes (avant liaison) de la même manière que l'exemple 2.

Dans un deuxième temps, il est procédé à la fonctionnalisation de ces billes de la même manière que dans l'exemple 2.

Dans un troisième temps, il est procédé à la synthèse du clathrate de formule (Ni(pz)[Ni(CN)₄] sur ces billes fonctionnalisées.

Pour ce faire, dans un tube de Schlenk, 2 g de billes de verre sont placés sous agitation avec une solution de 1,2 g de Ni(BF₄)*6H₂O dans du méthanol sous air pendant 2 jours. Ensuite, la solution est prélevée et une solution de 0,4 g de pyrazine dans du méthanol est ajoutée au solide sous agitation pendant 2 jours. A l'issue de ces 2 jours, la solution est, à nouveau, prélevée et une solution de 2 g de TBA₂Ni(CN)₄ (TBA signifiant tétrabutylammonium) dans du méthanol est ajoutée au solide sous agitation pendant 2 jours. La succession d'étapes mentionnée ci-dessus est répétée une deuxième fois pour assurer la croissance des nanoparticules à la surface des billes. Le matériau résultant présente une couleur rosée similaire à celle de la poudre de matériau Ni(pz)Ni(CN)₄ massif.

Le matériau obtenu est utilisé pour procéder à l'extraction de l'iode moléculaire.

Pour ce faire, on prépare une solution de 50 mL de cyclohexane contenant de l'iode moléculaire à hauteur de 3,86 mmol/L. A cette solution, on ajoute 0,5 g du matériau susmentionné et on agite l'ensemble pendant 1 semaine.

A l'issue de ce contact, l'analyse de la solution indique une concentration en iode moléculaire de 0,09 mmol/L.

Le matériau ainsi préparé est donc apte à capter l'iode moléculaire avec une capacité de piégeage de 0,2 mmol/g.

## Revendications

1. Utilisation pour l'extraction d'iode moléculaire d'un matériau comprenant un premier matériau répondant à la formule (I) suivante :
M(L)ₓ[M'(CN)₄] (I)
dans laquelle :
- M et M' sont choisis indépendamment, l'un de l'autre parmi Fe et Ni;
- X est un entier positif ; et
- L est un ligand organique choisi parmi les composés hétérocycliques, éventuellement aromatiques, comprenant au moins un atome d'azote, et
dans laquelle le matériau comprend, en outre, un deuxième matériau, qui est un support dudit premier matériau.

2. Utilisation selon la revendication 1, dans laquelle L est un composé hétérocyclique aromatique comprenant au moins deux atomes d'azote dans un cycle.

3. Utilisation selon l'une quelconque des revendications précédentes, dans laquelle L est choisi parmi les composés pyrazines, les composés pyridazines, les composés pyrimidines, les composés triazines et les composés tétrazines.

4. Utilisation selon l'une quelconque des revendications précédentes, dans laquelle L est un composé pyrazine.

5. Utilisation selon l'une quelconque des revendications précédentes, dans laquelle le premier matériau de formule (I) répond à la formule suivante :
Fe(L)[Ni(CN)₄]
L étant un ligand pyrazine.

6. Utilisation selon la revendication l'une quelconque des revendications 1 à 4, dans laquelle le premier matériau de formule (I) répond à la formule suivante :
Ni(L)[Ni(CN)₄]
L étant un ligand pyrazine.

7. Utilisation selon la revendication 1, dans laquelle le premier matériau de formule (I) est lié au support *via* au moins une liaison de coordination entre au moins un groupe du support et l'élément M et/ou l'élément M' du premier matériau de formule (I).

8. Utilisation selon la revendication 7, dans laquelle ledit au moins un groupe du support est un groupe comprenant au moins un atome porteur d'un doublet libre ou d'une charge négative.

9. Utilisation selon la revendication 8, dans laquelle ledit au moins un groupe du support est un groupe porteur d'un atome d'azote pourvu d'un doublet libre.

10. Utilisation selon l'une quelconque des revendications 1 à 9, dans laquelle ledit support est un matériau solide inorganique poreux.

11. Utilisation selon la revendication 10, dans laquelle le support est en un matériau oxyde.

12. Utilisation selon la revendication 11, dans laquelle le support est en oxyde de silicium, oxyde de titane, oxyde de zirconium ou oxyde d'aluminium.

13. Utilisation selon l'une quelconque des revendications précédentes, dans laquelle le matériau est :
- un matériau comprenant un premier matériau de formule Fe(L)[Ni(CN)₄], L étant un ligand pyrazine, ce dernier se présentant sous forme de particules et comprenant un deuxième matériau, qui est un support constitué par des billes en silice poreuse, auxquelles sont liées lesdites particules ;
- un matériau comprenant un premier matériau de formule Fe(L)[Ni(CN)₄], L étant un ligand pyrazine, ce dernier se présentant sous forme de particules et comprenant un deuxième matériau, qui est un support constitué par des billes en verre, auxquelles sont liées lesdites particules ; ou
- un matériau comprenant un premier matériau de formule Ni(L)[Ni(CN)₄], L étant un ligand pyrazine, ce dernier se présentant sous forme de particules et comprenant un deuxième matériau, qui est un support constitué par des billes en verre, auxquelles sont liées lesdites particules.

## Patentansprüche

1. Verwendung zur Extraktion von molekularem lod eines Materials, umfassend ein erstes Material, entsprechend der folgenden Formel (I):
M(L)ₓ[M'(CN)4] (I)
worin:
M und M' unabhängig voneinander ausgewählt werden aus Fe und Ni;
-x eine positive ganze Zahl ist; und
-L ein organischer Ligand ist, ausgewählt aus heterocyclischen Verbindungen, gegebenenfalls aromatischen, umfassend mindestens ein Stickstoffatom, und
worin das Material weiterhin ein zweites Material umfasst, das ein Träger des ersten Materials ist.

2. Verwendung nach Anspruch 1, worin L eine heterocyclische aromatische Verbindung ist, die mindestens zwei Stickstoffatome in einem Zyklus umfasst.

3. Verwendung nach einem der vorhergehenden Ansprüche, worin L ausgewählt wird aus Pyrazin-Verbindungen, Pyridazin-Verbindungen, Pyrimidin-Verbindungen, Triazin-Verbindungen und Tetrazin-Verbindungen.

4. Verwendung nach einem der vorhergehenden Ansprüche, worin L eine Pyrazin-Verbindung ist.

5. Verwendung nach einem der vorhergehenden Ansprüche, worin das erste Material der Formel (I) der folgenden Formel entspricht:
Fe(L)[Ni(CN)₄],
wobei L ein Pyrazin-Ligand ist.

6. Verwendung nach einem der Ansprüche 1-4, worin das erste Material der Formel (I) der folgenden Formel entspricht:
Ni(L)[Ni(CN)₄],
wobei L ein Pyrazin-Ligand ist.

7. Verwendung nach Anspruch 1, worin das erste Material der Formel (I) auf einem Träger gebunden ist, über mindestens eine Koordinationsbindung zwischen mindestens einer Gruppe des Trägers und dem Element M und/oder dem Element M' des ersten Materials der Formel (I).

8. Verwendung nach Anspruch 7, worin die mindestens eine Trägergruppe eine Gruppe ist, umfassend mindestens ein Atom, das Träger eines freien Elektronenpaars oder einer negativen Ladung ist.

9. Verwendung nach Anspruch 8, worin die mindestens eine Trägergruppe eine Trägergruppe eines Stickstoffatoms ist, das ein freies Elektronenpaar aufweist.

10. Verwendung nach einem der Ansprüche 1 bis 9, worin der Träger ein festes poröses anorganisches Material ist.

11. Verwendung nach Anspruch 10, worin der Träger ein Oxid-Material ist.

12. Verwendung nach Anspruch 11, worin der Träger aus Sliciumoxid, Titanoxid, Zirkoniumoxid oder Aluminiumoxid ist.

13. Verwendung nach einem der vorhergehenden Ansprüche, worin das Material ist:
- ein Material, umfassend ein erstes Material der Formel Fe(L)[Ni(CN)₄], worin L ein Pyrazin-Ligand ist; wobei letzterer in teilchenförmiger Form vorliegt und ein zweites Material umfasst, das ein Träger ist, gebildet aus porösen Siliciumdioxid-Kügelchen, auf welche die Teilchen gebunden sind;
- ein Material, umfassend ein erstes Material der Formel Fe(L)[Ni(CN)₄], worin L ein Pyrazin-Ligand ist; wobei letzterer in teilchenförmiger Form vorliegt und ein zweites Material umfasst, das ein Träger ist, gebildet aus Glaskügelchen, auf welche die Teilchen gebunden sind;
- ein Material, umfassend ein erstes Material der Formel Ni(L)[Ni(CN)₄], worin L ein Pyrazin-Ligand ist; wobei letzterer in teilchenförmiger Form vorliegt und ein zweites Material umfasst, das ein Träger ist, gebildet aus Glaskügelchen, auf welche die Teilchen gebunden sind.

## Claims

1. Use for extracting molecular iodine from a material comprising a first material fitting the following formula (I):
M(L)ₓ[M'(CN)₄] (I)
wherein:
- M and M' are selected independently of each other from Fe and Ni;
- x is a positive integer; and
- L is an organic ligand selected from heterocyclic, optionally aromatic compounds comprising at least one nitrogen atom, and
wherein the material further comprises a second material which is a support of said first material.

2. The use according to claim 1, wherein L is an aromatic heterocyclic compound comprising at least two nitrogen atoms in a ring.

3. The use according to any of the preceding claims, wherein L is selected from pyrazine compounds, pyridazine compounds, pyrimidine compounds, triazine compounds and tetrazine compounds.

4. The use according to any of the preceding claims, wherein L is a pyrazine compound.

5. The use according to any of the preceding claims, wherein the first material of formula (I) fits the following formula:
Fe(L)[Ni(CN)₄]
L being a pyrazine ligand.

6. The use according to any of claims 1 to 4, wherein the first material of formula (I) fits the following formula:
Ni(L)[Ni(CN)₄]
L being a pyrazine ligand.

7. The use according to claim 1, wherein the first material of formula (I) is bound to the support *via* at least one coordination bond between at least one group of the support and the element M and/or the element M' of the first material of formula (I).

8. The use according to claim 7, wherein said at least one group of the support is a group comprising at least one atom bearing a free doublet or a negative charge.

9. The use according to claim 8, wherein said at least one group of the support is a group bearing a nitrogen atom provided with a free doublet.

10. The use according to any of claims 1 to 9, wherein said support is a porous inorganic solid material.

11. The use according to claim 10, wherein the support is in an oxide material.

12. The use according to claim 11, wherein the support is in silicon oxide, titanium oxide, zirconium oxide or aluminium oxide.

13. The use according to any of the preceding claims, wherein the material is:
- a material comprising a first material of formula Fe(L)[Ni(CN)₄], L being a pyrazine ligand, the latter appearing as particles and comprising a second material, which is a support formed by porous silica beads, to which said particles are bound;
- a material comprising a first material of formula Fe(L)[Ni(CN)₄], L being a pyrazine ligand, the latter appearing as particles and comprising a second material, which is a support formed by glass beads, to which said particles are bound; or
- a material comprising a first material of formula Ni(L)[Ni(CN)₄], L being a pyrazine ligand, the latter appearing as particles and comprising a second material, which is a support formed by glass beads, to which said particles are bound.
